# EUROPEAN PATENT APPLICATION

(11) **EP 2 541 877 A1**
(43) Date of publication of application: **02.01.2013**
(21) Application number: 11250624.1
(22) Date of filing: 30.06.2011
(51) Int. Cl.: H04L 29/12, H04L 29/06

(54) **Method for changing a server address and related aspects**

(71) Applicant: British Telecommunications Public Limited Company, London EC1A 7AJ (GB)
(72) Inventor: The designation of the inventor has not yet been filed
(74) Representative: Brinck, Coreena Fiona Anne

(57) **Abstract**

A server configured to automatically change its IP address responsive to an address change triggering traffic event. The server comprises means to communicate repeatedly with a plurality of client devices over a communications network, means to receive information on one or more monitored traffic characteristics, means to change a current IP address used by the server for communications with a plurality of client devices responsive to said one or more monitored communications characteristics meeting a set of one or more IP address change criteria, and means to provide a new IP address used by the server as a result of said change to each of said plurality of client devices for use in future communications with said server.

## Description

The present invention relates to a method of changing an address of a server and related aspects. In particular but not exclusively, the method relates to how a server may monitor received communications traffic to determine when it should change its current Internet Protocol (IP) address to a new IP address. The server operates in a communication system configured to allow a security application running on a client terminal to identify a software contaminant and to related aspects. The security system provides a security application with an update function which enables its host device to obtain data from the server which enables the security application to determine the presence of a software contaminant. The data may additionally enable the security application to identify and disable one or more or all actions performed by the software contaminant on the host device, and preferably to effect the removal of the contaminant code from the device, and to related aspects.

Many different types of software contaminant are known in the art. Generally, a software contaminant comprises a computer program or a suite of computer programs which migrates to a device concealed or embedded within another software structure. Once installed on a host device, the software contaminant contaminates other software legitimately installed on the host device and can affect both data stored on the host device and the operation of both software and hardware processing components of the host device. The actions a software contaminant takes are often hostile, intrusive and/or damaging to the user of the device and/or to the host device (a host is here any device which provides an operating platform for the software contaminant). Examples of known types of software contaminants include computer viruses, worms, Trojan horses, root-kits comprising program(s) designed to hide or obscure the fact that a system has been compromised, privacy-invasive software such as spyware and dishonest adware, crime-ware, and other malicious and unwanted software and combinations thereof, and malware which attempts to conceal its presence on the host device. A software contaminant may be configured to target specific types of host device having a particular operating system, such as for example, a particular make of computer, mobile telephone type device, or games console etc.

Security systems hosted on devices can only seek to protect their host device from software contaminants of which they are aware and have the capability to identify and disable and/or remove from the host device. Known security applications try to prevent unauthorised modification to their host device (or another nominated target device connected to their host) which might result in compromised or unauthorised use of resources on the device. A security application installed on a host device usually scans incoming data communications such as emails and any attachments, or data from web-browser sites, etc., to identify the code of the software contaminant which is somehow embedded within the incoming communications data which could cause such unauthorised modification(s) to the device.

Security applications need to be able to receive additional data to enable them to cope with new software contaminants as these are developed and deployed. Many security applications are configured to automatically request or receive additional information from remote servers. The information updates may be frequent or infrequent and may not occur at predictable intervals of time. This can help protect the integrity of the update mechanism (a term used herein to refer to any form of data or information provided subsequent to the security application being installed on the client terminal) but also means that a user is less likely to be aware if a software contaminant has affected the ability of security software to obtain such updates from the remote server.

It is already known in the art for a security application to comprise one or more anti-malware software programs for detecting and removing malware software which has been already installed on to a its host. The anti-malware software is configured to scan a target device, normally the host device. In this way, the contents of the registry (which may be Windows specific, or another operating system's registry), operating system files, and other installed programs are scrutinised by the security software and a list is generated which can be used to compare against known malware components removing files that match. Both real-time and off-line protection from malware requires the ability to recognise that the software component(s) installed comprise malware, for example, the recognition process might involve scanning a file to determine if a sub-set of the data which provides a "signature" for that malware is present and/or if a computer program which is affected by the malware is exhibiting an anomalous behaviour.

In order to detect new forms of malware, security software needs to receive additional data to enable the security software's recognition process to be updated so the presence of the new malware on the host can be determined. Currently, updates are generally sourced from a subset of servers which are easily identified to allow simple updating from any location, for example: liveupdate.symantec.com, uk.mcafee.com, Windows Update etc.

To counter these known update mechanisms, malware will attempt to block access to security and update sites as part of its own protection mechanism to avoid detection and/or the removal of its method of propagation. Any changes to add new update sites can be excluded quickly by the malware authors once known. This impacts end users and support groups as customers are unable to download updates and new countermeasures to protect or remove multiple threats.

The present invention seeks to obviate and/or mitigate the above problems associated with the removal of malware which has already successfully contaminated a communications-enabled device having data storage and processing capabilities. The invention seeks to provide a server which is configured to enable client devices to receive data from the server even when the client is unable to initially communicate with the server at its current IP address. The server performs a method of changing an IP address according to the invention which relocates the server's source address so that if the original IP address has been targeted by the software contaminant, communications between the client and server using the server's new IP address are still possible. The ability for the client to communicate with the server enables a security application to be installed on the device and/or a security application to be updated if already installed on the device even if the software contaminant has already reconfigured the device to block access to the server at one or more known security software sites and/or security software update data sites.

Aspects of the invention are as set out herein below and in the accompanying independent claims and the preferred embodiments are as set out herein and in the accompanying dependent claims. The aspects and embodiments of the invention may be combined with each other in any suitable arrangement apparent to one of ordinary skill in the art.

One aspect of the invention seeks to provide a server configured to automatically change its IP address responsive to an address change triggering event, the server comprising:
means to communicate repeatedly with a plurality of client devices over a communications network;
means to receive information on one or more monitored traffic characteristics;
means to change a current IP address used by the server for communications with a plurality of client devices responsive to said one or more monitored communications characteristics meeting a set of one or more IP address change criteria; and
means to provide a new IP address used by the server as a result of said change to each of said plurality of client devices for use in future communications with said server.

The server may comprise a source of information for updating security applications running on said plurality of client devices.

The means to change the current IP address may comprise means to request a new IP address from a DHCP server.

The means to change the current IP address may comprise means to look-up a new pre-allocated IP address from a set of pre-allocated IP addresses.

A criterion for changing to a new IP address may comprise a number of client communications with said sever falling below a predetermined level.

A criterion for changing to a new IP address may comprise traffic received by the server exceeding a predetermined amount.

The amount of traffic may be dependent on the number of client devices currently configured to communicate with the server.

The amount of traffic from the same source may be determined, and a criterion may comprise the amount of traffic from the same source exceeding a predetermined amount.

The means to provide said changed IP address may comprise means to generate a communication to a proxy server, the proxy server comprising means arranged to generate a communication comprising a special code item which enables said new IP address to be determined by each said client terminal.

A monitored traffic characteristic may indicate one or more attempts to obtain a current server IP address by a remote data server.

The server 44 may be configured to broadcast or multicast to said plurality of client terminals (10, 16) a communications message within which data is provided which when processed by a said client terminal (10, 16) enables the client terminal (10, 16) to derive the new IP address for the server, said broadcast or multicast having the old IP address of the server 44 as source address.

Another aspect of the invention seeks to provide a communications system comprising:
a server according to any of the above server aspects or preferred embodiments;
a proxy server;
and at least one said client terminal arranged to communicate with said server to obtain additional data for a security application running on said client terminal, the security application when running on said client terminal comprising:
   means to scan an incoming communication;
   means to determine if the incoming communication comprises a special code item;
   means to process the special code item to determine a said new server address; and
   means to use said new server address for communicating a request for said additional information to said server address.

The incoming communication may have an address of said proxy server as its source address.

Another aspect of the invention seeks to provide a method of changing an IP address of a server, the method comprising:
monitoring one or more characteristics of communications traffic addressed to or from the server;
determining if at least one monitored characteristic meets an address change criterion;
causing a change in the IP address of the server responsive to said determination of a address change criterion being met.

At least one monitored traffic characteristic may indicate one or more attempts to obtain a current server IP address.

At least one type of monitored traffic characteristic may comprise a client-server communications traffic rate characteristic, and wherein said address change criterion comprises said client-server communications rate meeting or falling below a predetermined level.

At least one type of monitored traffic characteristic may comprise a non-client-server communications traffic rate characteristic, and wherein said address change criterion comprises said non-client-server communications rate meeting or rising above a predetermined level.

Embodiments of the invention will now be described with reference to the accompanying drawings which are by way of example only and in which:
Figure 1 shows how the operation of a contaminated client terminal differs from the operation of an uncontaminated client terminal when requesting update data in a communications system;
Figure 2A shows an exemplary client terminal having an uncontaminated state arranged to implement an embodiment of the invention;
Figure 2B shows an exemplary client terminal arranged to implement an embodiment of the invention in a contaminated state;
Figure 3 shows a first embodiment of the invention in which the client terminal broadcasts an address update request;
Figure 4 shows an exemplary message flow for the first embodiment of the invention;
Figure 5 shows steps in a method of obtaining an updated server address according to another embodiment of the invention;
Figure 6 shows an embodiment of the invention in which address updates are broadcast by client terminals;
Figure 7 shows an exemplary message flow in another embodiment of the invention in which local proxy server address updates are broadcast to client terminals;
Figure 8 shows an exemplary message flow in an embodiment of the invention in which a proxy server responds directly to a client terminal which has broadcast a request for a proxy server address update;
Figure 9 shows schematically a security server under attack from an attack source;
Figure 10 shows an attack on a plurality of client terminals;
Figure 11 shows schematically an attack source continuing to attack the original IP address and a client terminal when a server has changed its IP address according to an embodiment of the invention;
Figure 12 shows how the server shown in Figure 11 at the new IP address can communicate with client terminals including a client terminal which has been contaminated under attack;
Figure 13 shows how a client terminal which has been contaminated can remove a software contaminant as a result of resuming communications with the server at the new IP address; and
Figures 14A and 14B show examples of a method of changing the address of a server responsive to the detection of a traffic event according to an embodiment of the invention.

Embodiments of the invention including the best mode currently contemplated by the inventor are described herein below. Persons of ordinary skill in the art will be aware of equivalent functional features to those described in the embodiments herein which are exemplary only. The description of the invention and drawings may omit features whose presence and function in the context of the invention are already known in the art where the inclusion of such features would be apparent to one of ordinary skill in the art.

To clarify the scope of the invention, the following words and phrases are defined in the context of the invention:
The term security application is used herein to refer to any appropriate known type of security software application or to any future security software application which is executed on a host device and which may require additional data to maintain its effectiveness. The security application is in addition configured to scan incoming data on its host platform or on an attached device.

Computer security software seeks to provide a secure computing environment on a client device (or terminal, the two terms being used equivalently herein in the context of the invention) to prevent actions being executed by code on the device which are instigated by an unauthorised and/or unauthenticated entity is often referred to by those of ordinary skill in the art as a "firewall" or an "anti-virus" or "anti-malware" or "anti-adware" software application which will be referred to herein by the generic term "security application".

Examples of security software applications which may be adapted for using a method of determining an update server according to an embodiment of the invention include security applications such as those distributed by McAfee™, Norton™ , and Kaspersky™ for home (and business etc) use as well as other commercial scale security software applications. Typically such security software comprises one or more computer program(s) and one or more computer libraries (collections of sub-routines or classes which provide functional services or instructions to other programs, for example the sequence of bytes necessary to identify a malicious TCP packet or instructions on where to examine a file to determine if its infected) which help secure a device. Some types of such security application are configured to protect a unique device such as a computer system whereas other types of known security application may be capable of protecting a plurality of devices, for example, a computer network (which may comprise one or more computers and/or other types of hosts which can be networked together on a permanent or transient basis). A security application which is suitable for the update mechanism described herein must implement functionality which scans incoming data to its host device.

Accordingly, at least one embodiment of invention seeks to. provide a means for a security software application which protects a communications-enabled host device from being infected with software contaminants (such as viruses and spyware and malware etc). The security application is configured to implement real-time protection against the installation of software contaminants on the host device by scanning appropriate incoming data for software contaminants (and may block and/or disable any threats which are recognised by the security software). Techniques used to detect incoming software contaminants and block and/or disable it are well-known in the art, however, the invention provides a mechanism to improve the recognition capabilities of the software contaminant by enabling additional data to be provided to the host device for use by the security application.

The term host device as referred herein has the meaning commonly assigned in the art, for example, to the client terminal on which the security application updated using an embodiment of the invention resides, which may or may not be the host device on which a software contaminant is located.

An update server refers herein to a server configured provided additional information including data updates to a security application hosted on a client terminal.

An Address Distributing Server refers herein to a remote server configured to communicate with a client terminal to trigger the client terminal to use a different update server address for requesting additional information.

A proxy server refers herein to a remote server configured to communicate with an update server and a client terminal according to an embodiment of the invention.

The term client terminal as referred to herein has the meaning commonly assigned in the art, for example, to a host device configured to communicate with an address distributing server and an update server according to embodiments of the invention. A client terminal comprises any type of device capable of being infected with a software contaminant and hosting a security application. Examples include client devices which use wired or wireless communications, for example, computers, mobile communications devices (e.g. mobile telephones, personal digital assistants (pdas), supervisory control and data acquisition (SCADA),devices, tablet devices and games consoles to name a few examples), set top boxes (STBs), any entertainment devices with a data communications and/or update capability (for example, televisions, wireless speaker sound systems). All such client terminals are capable of being contaminated with a software contaminant which affects the way one or more applications run on the client device and/or affect the operating system and/or other hardware and/or software components of the device.

The term software contaminant as referred to herein has the meaning commonly assigned in the art and includes for example, code which contaminates both software and hardware components. A software contaminant is capable of collectively referring to one or more types of "virus", "malware" or "adware" etc. Typically a software contaminant is transferred to a client terminal in some concealed manner, often their code is embedded within the code of data/applications which are legitimately being distributed to the client terminal. Many potential migration paths for software contaminants to a host device are known in the art and include electronic mail communications and their attachments, downloaded content, malformed content designed to exploit a weakness in the host device code, web-browsing content, and other types of data transfers (e.g. file or streamed content transfers) which are facilitated via a wired or wireless communications protocol or via an "infected" data carrier (e.g., a data storage disk such as a CD, or DVD, or flash memory device etc, etc,) being read by the client device. Some types of software contaminants have a disguised presence and/or function in which anomalous activity is apparent to a user of the device hosting it. Other types of software contaminants operate unobtrusively to minimise anomalous activity being detectable by a user of the infected host device, for example, malware.

In the context of the present invention, one embodiment comprises a method of updating data utilised by a security application running on a client terminal. The additional data introduces and/or improves the recognition capabilities of the security application and/or improves the operational performance. The method in outline comprises a security application scanning incoming data, for example, an incoming communication such as an email or file or data stream for items of an interest from a security perspective. If a special code item is recognised in the incoming data, instead of treating the data as either legitimate or a potential software contaminant, the security application processes the incoming data on the basis of it relating to a change of address for its update server. In this case, the special code item is processed to determine a different server address to the server address to which the security application is currently configured to send update requests to. To ensure that such communications are not blocked by malware, the source address of such incoming communications is usually disguised. For example, they may show the server address of a proxy server or a spoof address. The trigger for the special processing here is not the source address of the incoming data, but the new address which results from processing the incoming data.

The special code item is provided in an encrypted form which is extracted from its data carrier and the host device then decrypts the special code item to determine said different server address. Alternatively, the special code item is configured to trigger a security application to use a different server address already stored or calculable on said client terminal. Once the client terminal has the different server address, the security application is reconfigured to address requests for additional information to said different server address. In response to said request being received by the update server, additional data is sent to the client terminal. The additional data may be sent in a conventional manner to the client terminal; alternatively, it may also be embedded in one or more data communications addressed to the client terminal. The security software may also be configured to automatically receive such additional data by a user of the host device activating a link identified in a second data communication received by the host device. An exemplary "special code item" known in the art is a "token" or "cookie".

The security application then seeks to detect, identify, and disable software contaminants found on their host device (which may be the client device or another target device if this is not the host device supporting the execution environment of the security application) using the additional information it has received. A security application to prevent and/or remove such contaminants from its host (or another target device connected to its host) by performing appropriate types of "scans" in which code present in one or more or all parts of the computer architecture of the host device is scrutinised for anomalies and/or matches to known software contaminant presence indicators.

As new software contaminants are created and new versions of existing software contaminants are changed, it is particularly important for a security application already distributed and installed on a client device to be able to obtain additional data which can be used to determine if operational anomalies are present and/or receive new software contaminant presence indicators.

However, some software contaminants such as malware operate in a manner which blocks the usual mode of accessing updates for the security application software from a server, and moreover, this operation of the malware may be executed in such a way that a user of the device is not aware or would find it not obvious that such updates are not being received. Updates may not be regularly received, alerts may be disabled by the malware, and the user may have a false perspective that the device is secure.

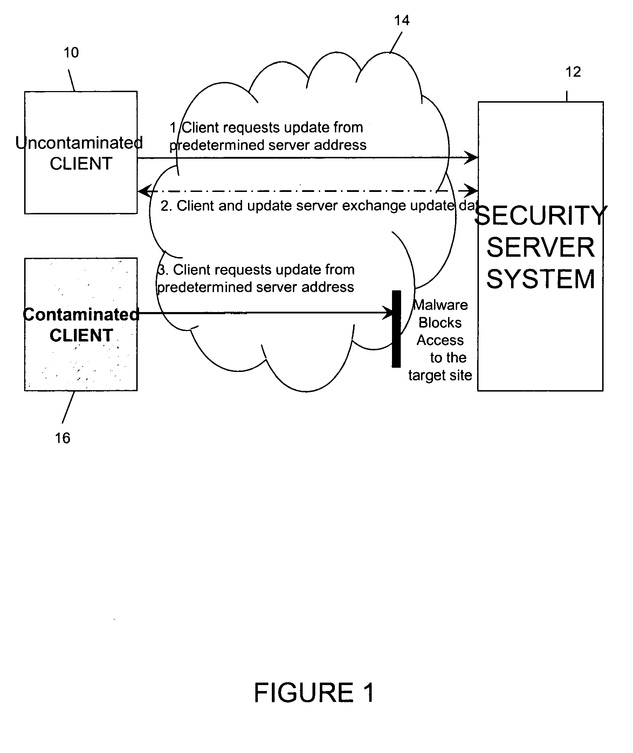

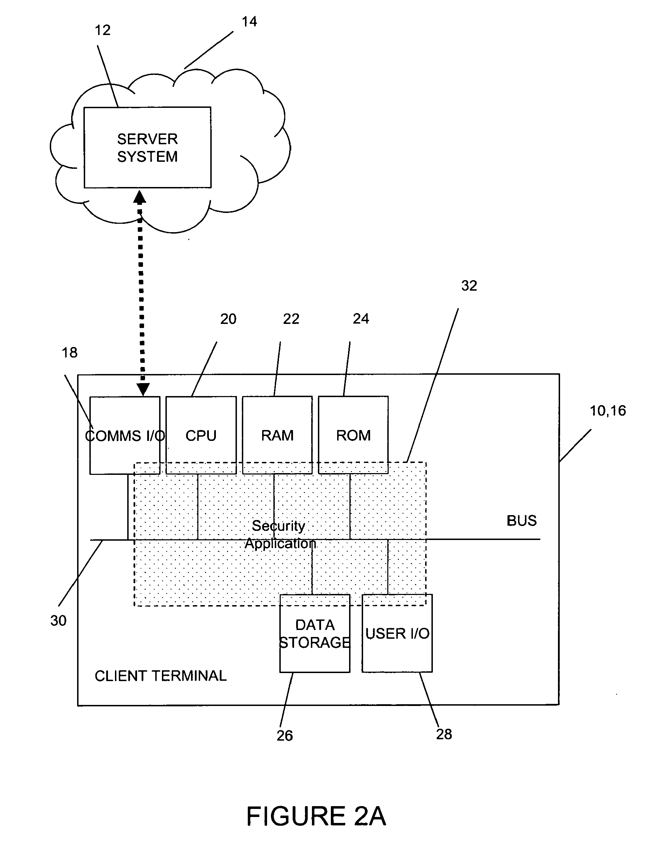

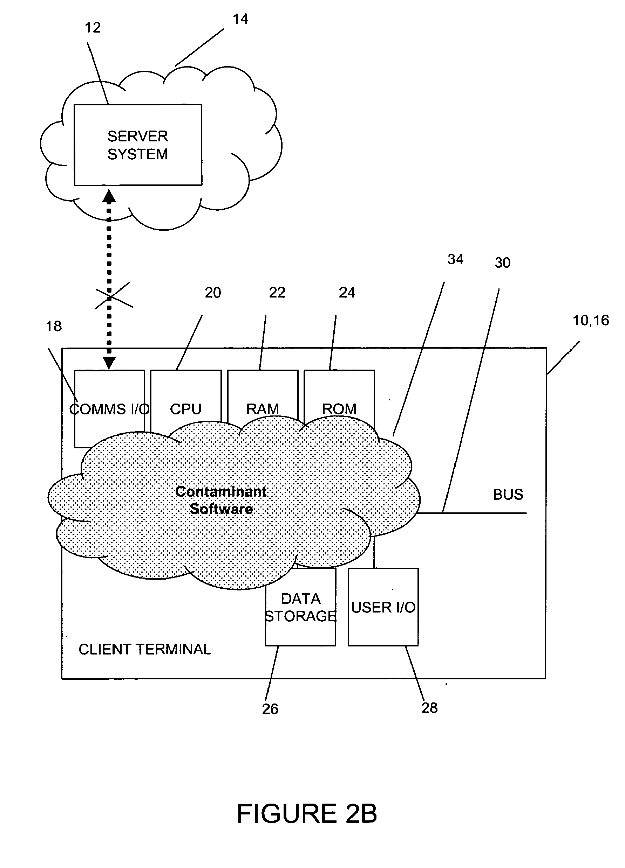

Figure 1 of the accompanying drawings shows how computer software comprising a security application 32 (not shown in Figure 1, see Figure 2) which is arranged to run on uncontaminated client terminal 10 is able to request and/or receive data from a remote security server system 12 at a predetermined server address. The requested data provides additional information to the security application 32 (see Figure 2) which updates the information available to the security application 32 to identify and/or disable software contaminants located on the client terminal 10 or, in some cases on a device attached to the client device which the security software is configured to implemented a scan.

A software contaminant comprises one or more computer programs which perform operations which a user of the client terminal might not wish to be performed and/or that the user is unaware are being performed and/or which cause anomalies in the operation of software running on client terminal 16. A contaminated client terminal 16 includes one or more software contaminants which may prevent additional information from being provided to the security application 32. For example, as shown in Figure 1, a software contaminant on contaminated client terminal 16 comprises means to prevent its host device 16 from generating communications to security server system 12 at the predetermined server address as this is an address the software contaminant has knowledge of either statically and/or dynamically, for example either through its source program code or through its host's operational environment, for example, through the security software itself.

In an exemplary embodiment as shown in Figure 1, the security application 32 is configured to generate requests for additional data which are sent to an address of a server in the security server system 12. The security application 32 directs the request using a web-browsing protocol, to a universal resource location (url) address, either directly or through the client terminal's web-browsing application, for example, Mozilla™, Internet Explorer™ , Netscape™ and the like. In this example, the security application generates a request for additional information which is sent over a communications network 14 to a server located at a predetermined server address which is accessed by generating a communications message to the url: update.acme.com, which is translated into the address of a local server using a suitable domain name server (DNS) operation which enables the local proxy server to be discovered using HTTP. When the server (or proxy or mirror server) receives a message addressed to the update.acme.com it processes the message to extract the request data, to authenticate the client and validate the request, and responds with the requested update information if available to the client. Any suitable form of authentication may be used, for example, a private/public key pair which enables the client terminal to be provided with a public key which enables it to authenticate messages which have been encrypted with the corresponding private key as messages which have originated from the security server system 12.

At some point in time, however, the client terminal 16 receives computer code comprising or consisting of a software contaminant 34 (see Figure 2B). The software contaminant 34 may operate in a manner which a user of the client terminal 16 will find difficult to detect, for example, it may disrupts or affect the operation of only some actions performed by the client terminal 16 which would otherwise proceed differently, or it may be more visible to a user of the client terminal 16.

The invention, however, has particular use for enabling a software contaminant 34 to be removed from a client terminal 16 even where the presence of the software contaminant 34 on the client terminal 16 is not apparent to an end user or even detectable by a security application which might otherwise seek to disable and/or delete the software contaminant 34.

In one embodiment, amongst the actions which are impacted by the contaminant software 34 are communications between the client terminal 16 and the security server system 12 as the contaminant software 34 is configured to prevent data from being sent to and/or received from one or more server addresses which have been associated with security services. Typically such a software contaminant 34 additionally affects the security of the client terminal 16 by compromising data and/or performing actions which the user would not wish to be performed, and as such may be referred to as malware.

One example of a software contaminant 34 comprises computer code which reconfigures one or more components on the client terminal 16 so that if the security software application 32 requests an update from the update server 12, the request is not sent out to the security server system 12 over the communications network 14 and/or one or more communication modes (for example, some ports may be disabled and some drives) to limit communications sent/received by the client terminal 16 which contain the security server system's address as the source/destination address are affected and/or blocked by the software contaminant 34. For example, the client terminal 16 may be reconfigured so that any communications addressed to update.acme.com is not sent out over an external interface of the client terminal 16. Alternatively, or in addition, the software contaminant 34 may reconfigure the client terminal 16 to not accept communications sent from update.acme.com, the address of the remote security server 12. Alternatively, or in addition, the software contaminant 34 blocks information from being provided to the security software 32 running on the client terminal 16 and/or the software contaminant 34 may seek to modify the authentication details provided by the client terminal 16 to the security server system 12 and/or by the security server system 12 to the security software 32 running on the client terminal 16. These various ways of preventing further communication between the security server system 12 and client terminal 16 as one or both of them will not trust that it is correctly communicating with the other are well known in the art. Alternatively, or additionally, the contaminant software 34 may disguise the message failure so that a user is unaware that updates are not being provided. If the contaminant software 34 is able to emulate the response from a security server 12, it is possible to further compromise the security application 32.

When a security software application 32 running on the client terminal 16 is able to receive additional data, this can enable it to identify the presence of a software contaminant 34 (for example, by determining that certain actions are being performed by the client terminal 16 which have a particular profile which is known to the security server system 12 as indicative of a software contaminant 34 using the client terminal 16 as a host). If the software contaminant 34 prevents communication of such additional data from the security server system 12 to the security application 32 running on the client terminal 16, a software contaminant 34 is able to maintain its presence on the client terminal 16 for longer as it is less likely to be detected by the security application 32 running on the client terminal 16.

Figure 2A of the accompanying drawings shows a security application 32 according to an embodiment of the invention which is hosted by an exemplary client terminal 10, 16. As shown in Figure 2A, a client terminal 10, 16 comprises components typical of a computer such as a communications interface 18 which is configured to enable data to be received from and sent over communications network 14. An exemplary communications interface 18 known in the art, for example, comprises a network interface card (NIC) via which the client terminal 10,16 is able to connect with the security system server 12 using communications network 14. Other components provided on client terminal 10 which support the operation of the security software application 32 include a central processing unit 20 which processes data. Various types of memory 22, 24, 26 are provided for data storage, such as for example random access memory 22, read only memory 24, or other data storage means 26, for example, hard-disk or flash memory, which may be removable from the client terminal 10. At least one form of memory is suitable for storing any additional data received from the security server system 12 so it is accessible by the security application 32. A suitable data input/ output interface may also be provided to enable user generated input (for example, via a keyboard or mouse or touch sensitive screen etc) and/or to provide output to a suitable display 34. Also shown schematically in Figure 2 is a common bus 36 connects the components of client terminal device 10, 16.

In some embodiments, the client terminal 10, 16 does not have a conventional user interface and/or may not have any means to receive user input to the security application 32. For example, a device such as a television set-top box or games console which has internet connectivity may only be provided with means for a user to select programme information or perform certain gaming actions respectively. However, it is possible for such a device to still be contaminated with contaminant software and as such, a security application may be provided which implements the invention automatically to remove software contaminants without user input

One embodiment of a system for disabling a software contaminant according to the invention seeks to provide a security application 32 (as shown in Figure 2A) which is arranged to automatically receive additional information from a remote security server system 12 even when a software contaminant is operating on the client terminal 16 in a way which affects communications between the client terminal 16 and the remote server system 12.

Although in the embodiment shown in Figure 2A of the accompanying drawing client terminal 16 comprises a typical personal computer, for example, a desk-top or portable or laptop computer type device, those of ordinary skill in the art however will appreciate that the invention can enable any contaminated client terminal 16 to disable one or more actions which the contaminant software performs, and the term client terminal is thus intended to refer to any communications-enabled device capable of being impacted by such contaminant software such as, for example, a games console, a set-top box, a personal digital assistant type device, telephone type device, or a mobile telephone type device.. In other embodiments of the invention, a data connection is established between a target client terminal which may host a software contaminant 34 and a client terminal 10,16 which hosts the security application 32 so the security application 32 can scan the connected target client terminal.

Figure 2B shows schematically an example of a software contaminant 34, which is capable of affecting the operation of one or more or all of the components shown in Figure 2A.

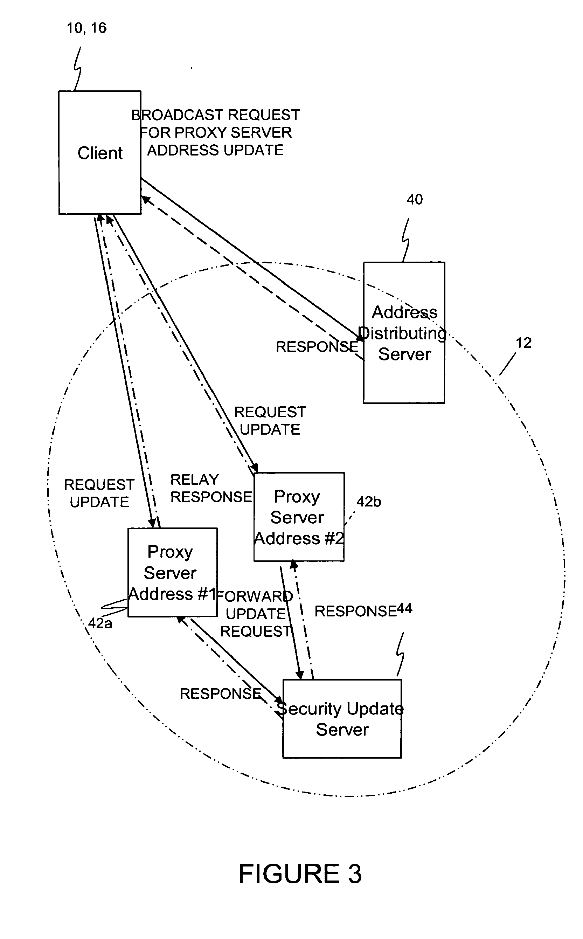

Figure 3 of the accompanying drawings shows an embodiment of the invention in which remote security server system 12 comprises an address distributing server 40, a security data update server 44 and at least one proxy server 42, although in this exemplary embodiment two proxy servers 42a,b are shown in Figure 3. In this embodiment, the address to which client terminals send their requests for additional data from the security data update server 44 in security server system 12 changes from time to time and the changes to the address of the data update server 44 are communicated to a plurality of client terminals by the address distributing server 40. The communications from the address distributing server 40 are arranged to automatically update the address to which each client terminal 10, 16 sends a request for a data update for its respective security application 32. The contaminant software 34 running on client terminal 16 is arranged to only disrupt communications between the client terminal 16 and one or more predetermined server addresses of which its creators were aware of and either specified in the software contaminant 34 source code or which the software contaminant determines when it runs on its host device. The addresses which are to be "blocked" or otherwise have communications with interrupted may be determined from applications present when the software contaminant is first installed on the client device 16 or may be updated by the contaminant software 34 whenever it determines a relevant server address is associated with an application installed on its host device.

The update server can be aware of the success or failure of the client terminal to receive the update and/or the outcome of the update and its impact upon said client terminal allowing an administrator to record and/or determine the appropriate resultant action.

In the embodiment shown in Figure 3, the client terminal 16 receives a new address for a proxy server 42a,b for update server 44 and it is by sending requests to the proxy server address that enables the client terminal to receive additional information for its security application 32. The proxy address provided is assigned dynamically and so is not already known to the contaminant software 34 (although the contaminant software 34 may be capable of determining the address through its use and/or itself be remotely updated to know the new server address in due course).

Until the software contaminant disrupts communications with the new proxy server address, the security application 32 running on the infected client terminal 16 is able to receive additional information. If the contaminant software is not able to block the communications to and/or from the update server 44, the security application can receive additional information and/or software components which can be installed on the client terminal 16. The security application 32 can then use the new data received to determine if new types of software contaminants (including software contaminants which were undetectable prior to the update being provided) are running on the client terminal 16. A detected software contaminant 34 can then be identified and/or disabled by the security application 32. In the best mode of the invention, the contaminant software 34 is then removed from the client terminal 16 (for example, by deleting the code comprising the contaminant software 34).

In Figure 3, consider for example, a client terminal 10,16 which includes a security application 32 comprising software which is configured to receive security update data from a security update server 44 via a first proxy server address #1. At some point a software contaminant 34 becomes active on client terminal 16, and affects communications between the client terminal 16 and security update server 44 to prevent its detection and/or identification and/or disablement and/or removal. For example, the security application 32 may be prevented from requesting and/or receiving and/or using any additional data from the first proxy server address for security update server 44. At a subsequent point in time, however, the address distributing server 40 sends data to the client terminal which includes a new proxy server address #2. Until the client terminal 10,16 is infected with a software contaminant which disrupts communication with the new proxy server, the security application 32 is able to receive additional information from the security update server 44 via the proxy server 42b having the new proxy server address #2. In this way, therefore a mobile proxy server system is provided which acts as a conduit for communications between client terminals 10, 16 regardless of the presence of any software contaminant the client terminal may be infected with. As additional security information is thus always accessible via a new proxy server address to the client terminal, even if is infected with a software contaminant, the security software application 32 can be maintained with the latest data to enable new types of software contaminants to be detected and disabled and/or removed.

The address distributing server 40 distributes the addresses of new proxy servers according to an embodiment of the invention by disguising address update information in data communications and data transfers received by the client terminal 10,16. The security application running on the client terminal is configured to scan incoming communications and data transfers as part of its normal operation to determine if code comprising an address update tag comprising a special coded data item is embedded within the data received by the client terminal 10, 16.

In a preferred embodiment, the security application is configured to scan incoming data communications addressed to a user account associated the client device 10,16, such as electronic mail communications which the client device is configured to receive. Providing this functionality is maintained, when the security application performs its normal scanning function of the incoming data communication, a "tag" is detected and can be extracted for further processing. The security application is able to detect the coded "tag" in the same way that the security application is configured to recognize code comprising a software contaminant in an incoming communication.

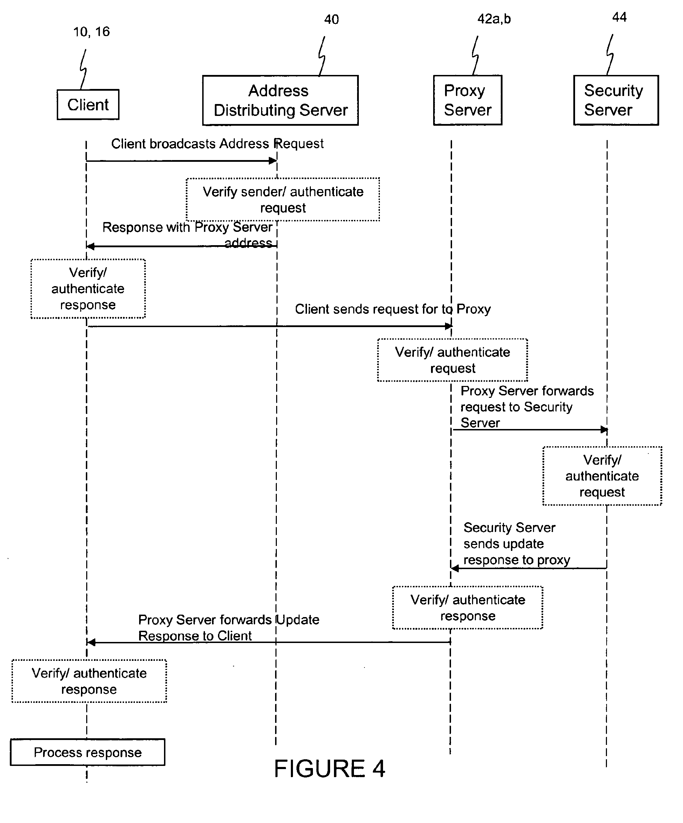

In one embodiment, address updates are provided responsive to broadcast requests from client being received by an address distributing server 40. The request is broadcast in such a way that the address distributing server is not identifiable by the client device. The embodiment of a system for identifying and/or disabling a software contaminant shown in Figure 4 is only suitable if a software contaminant 34 has not blocked the client device 16 from generating broadcast requests.

Figure 4 shows the flow of messages between the client terminal 10,16 and the security server system 12 which provide a client terminal 10,16 with the ability to update its security application 32 with a new address for the update server 44 (as shown in Figure 3). Firstly, the client terminal 10, 16 broadcasts a request for an update to its update server address to address update server 40. The broadcast message advertises the client terminal 10, 16 locally within a broadcast domain, using one or more suitable broadcasting method(s) known to those in the art. For example, a local DNS TXT name, subnet or local network broadcast or proprietary handshake can be used to request a server address and initiate a connection from the security application's update mechanism on the client terminal 10, 16. Providing a software contaminant 34 present on the client terminal 16 is not configured to block broadcast requests, the broadcast enables an infected client terminal 16 to send out a message over communications network 14 which several servers will receive. To ensure that only the address distributing server 40 is capable of understanding the message, however, the client terminal 16 is provided with an encryption key when installing security application 32 with which the contents of the broadcast message are encrypted.

When Address Distributing server 40 receives a broadcast communication, it decrypts the broadcast message using a corresponding decryption key to verify the sender and/or authenticate them. This enables the address distributing server 40 to determine the request is from a client terminal 10, 16 hosting an appropriate security application 32 and the source address of the broadcast message enables the Address Distributing Serer 40 to determine from which client terminal 10 16 the request was issued.

Once the address distributing server 40 has authenticated a request from a client terminal 10, 16 and the broadcast message is deemed to be from an authentic client terminal 10,16 the address distributing server 40 then responds with an encrypted message containing at least one proxy server 42a,42b address, which when received by the client terminal 16 is similarly appropriately validated and/or authenticated. As the security application 32 running on the client terminal 16 is configured to scan all incoming messages it is able to determine from the tag included in the data (or example, this may be in a packet header or payload area, or within the actual text content area of a communications message/file transfer that an update mechanism should be implemented.

In one embodiment, the presence of an update tag includes a hash associated with its time of issue, and this has to be used by the client device when communicating using the new proxy server address and verified by the proxy server before security updates are received. This prevents software hackers and other parties attempting to spoof the response from the address update server. In other embodiments, in addition or instead of providing hash information, the "tag" comprises an encrypted proxy server address which the client terminal 10, 16 decrypts and/or functions as a trigger for the client terminal 10, 16 to change the proxy server address using an algorithm or list mechanism hosted on the client terminal. The address which the algorithm or address indicates is one which matches a similar operation performed at the address update server to generate a new proxy server address. The address distributing server must coordinate the update of an individual client terminal's new proxy server address or communicate a new address to all client terminals in its network which should then use the new proxy server address.

Once the data packets forming the communications message, data stream or data file containing the tag has been processed appropriately, for example, to decrypt the message contents, the information it contains can be processed by an update mechanism to extract a new proxy server address.

The proxy server address dynamically changes the address of the proxy server 42 to which security application 32 sends out a request for additional security information. Where it the broadcast is deemed not to be authentic there shall be no response to avoid the contaminant identifying Proxy or Address Distributing Server addresses and blocking them.

The security application 32 then sends out a message containing a request for update information to one of the proxy server addresses provided (if more than one is provided the security application 32 either selects just one proxy server address from those provided or alternatively, it multicasts a request message to a plurality of proxy server addresses). If more than one proxy server address is active at any one time, each proxy server 44a,44b receiving a request performs an appropriate authentication/validation process before forwarding the request to the update server 44.

In one embodiment, update server 44 is assigned a permanent address location (for example, a static IP address) whereas the proxy servers 42a,b are assigned new addresses dynamically. The physical location of a proxy server 42a,b on the network does not therefore need to be changed as long as its addressable location is changed using the update mechanism the invention provides.

Update server 44 will also process (and validate/authenticate) a received message forwarded by a proxy server 42a,b before responding with appropriate update information which is then encapsulated in an appropriate message (and encrypted), and then forwarded to the client terminal 10,16 via a proxy server 42a,42b. The proxy server 42a,42b then forwards the response to the client terminal 16 (optionally performing an authentication process on the forwarded message prior to forwarding it). As the contaminant software 34 running on the client terminal 16 only determines that the client terminal 16 has received software from an unknown address which is not associated with update server 44, it does not prevent the client terminal 16 from receiving the update message. The security application 32 then processes the message, decrypting it and/or validating and/or authenticating its source as appropriate, and then uses the data received for example, by installing the update information.

The client terminal 16 is already infected with a software contaminant 34 which previously it was not able to detect using its security application 32. Now that the security application 32 has been provided with additional detection information through the above update mechanism, when the client terminal 16 next runs its security application 32, if the update includes information on how to determine the presence of the software contaminant 34 on the client terminal 16, the updated security application 32 will be able to determine the presence of the contaminant software 34 and disable it.

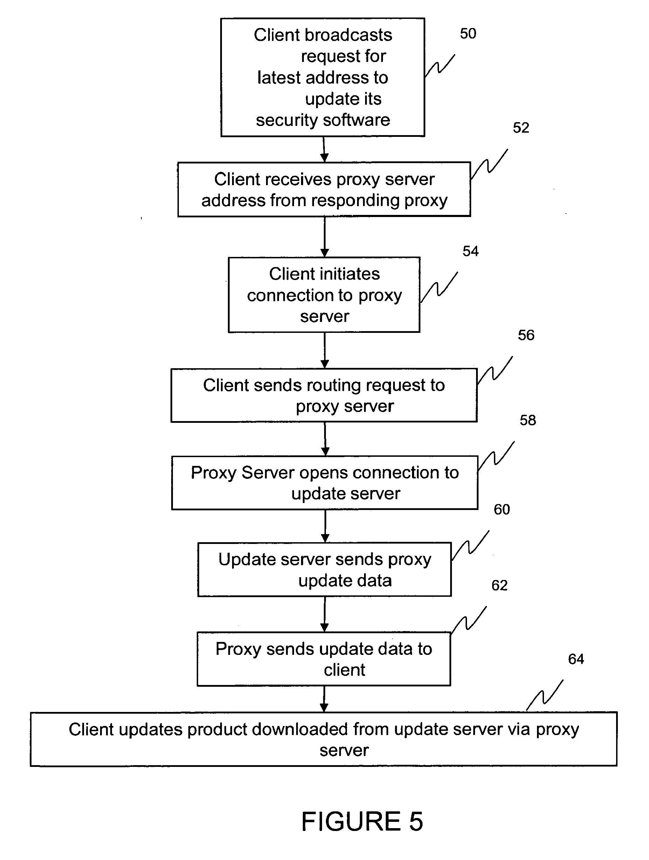

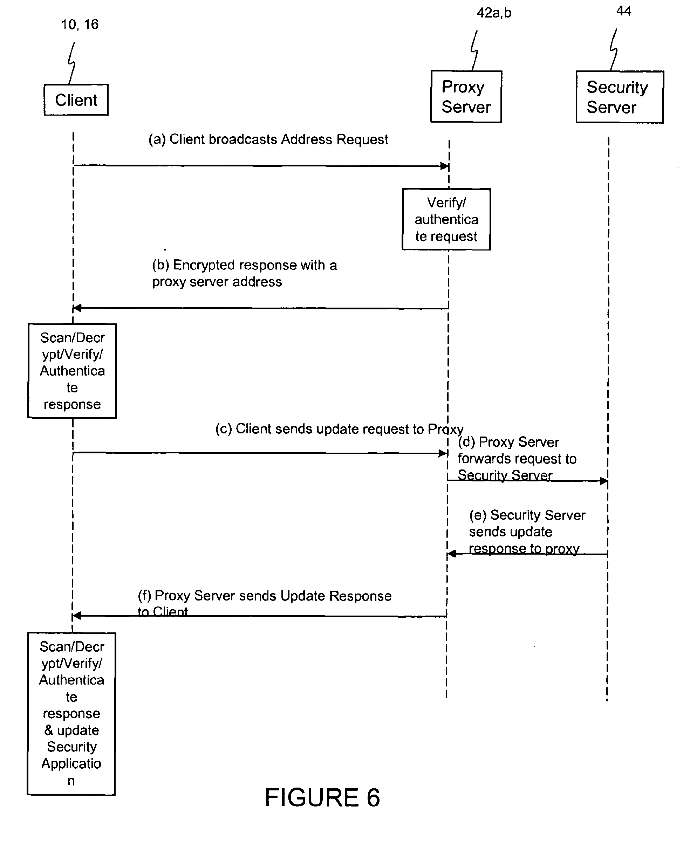

Figures 5 and 6 show an embodiment in which client terminal 16 generates a broadcast which is responded to directly by proxy servers 42a, 42b.

In Figure 5, steps in an embodiment of a system to identify a software contaminant comprising the system components further implementing a method of determining the address of a data server to enable the removal of a software contaminant of the type known in the art as malware are shown. The method comprises the client terminal 10, 16 broadcasting a request for an address for a server 44 via which the client terminal 10, 16 can obtain data to update its security software 32 (step 50). As shown in Figure 5, the method is suitable for a communications security service system which does not have a dedicated server 40 to distribute proxy server addresses to client terminals 10, 16 such as was shown in Figure 3 as the data distributing update server 40. A proxy server 42a,b which receives this request and successfully authenticates the request to verify it is genuine in response sends out its own address to the client terminal 10,16 which generated the query. The client terminal 10, 16 receives the proxy server address from the responding proxy server 42a,b (step 52). The security application 32 is arranged to intercept incoming communications including the response, and when the response is received and scanned, code embedded in the response indicates that the information the response provides includes address update information for the client terminal 16. When the security application 32 imports the new proxy server address information, the client terminal 10, 16 is able to initiates a connection to the proxy server 42a,b (step 54). The security application 32 running on the client terminal 10,16 then sends out a request for additional data comprising an update for the security application 32 which is routed via the proxy server 42a,b (step 56). The proxy server 42a when it receives this request opens up a connection to the update data server 44 (step 58) and forwards the request to the update data server 44. The update data server 44 receiving the request processes it, generates or retrieves from storage appropriate update information for the security application 32 running on that client terminal 10, 16 and sends the update information to the proxy server 42a (step 60). The proxy server 42a then forwards the update information to the client terminal 10, 16 (step 62). The security application 32 running on the client terminal 10,16 will then, when it scans this incoming communication, and after performing any necessary de-encryption and/or authentication and/or validation of the message, extract data comprising the relevant update information. The security application 32 is configured to then use the information which has been downloaded from the update server 44 via the proxy server 42a (step 64) to update itself either by executing additional software components and/or increasing its library information to enable the identification and/or disablement and/or removal of software contaminants hosted on the client terminal 10,1 6 or a target device attached to the client terminal 10,16 .

Figure 6 shows the corresponding message flow between the various security system components (shown here as proxy server 42 and the security information update server 44) and the client terminal 10, 16. As shown in Figure 6, a client terminal 10, 16 broadcasts a request for an address to contact to update its security application 32. A proxy server 42 which is in the broadcast domain of the communications network local to the client terminal 10, 16 receives the request message, verifies/authenticates it, and responds with a message which includes the address of security update server 44. The client terminal 10, 16 receiving the response, processes the response to verify its origins and authenticate the information to update its security application with the address of the responding proxy server 42. The client terminal 10, 16 then generates a request for a security update which is addressed to the proxy server 42 which forwards it to the security update server 44.

Security update server 44 then processes the request and responds to the client via the proxy server 42. In this way, the update mechanism does not need an additional server platform simply to distribute the additional proxy server addresses to the client terminals 10, 16 in the network. It also enables a service to be provided to the security server 44 which enables the security server 44 to retain a fixed address which is held secure against potential identification by software contaminants which are hosted on client terminals 10,16 as these client terminals never establish a direct communications link with security server 44.

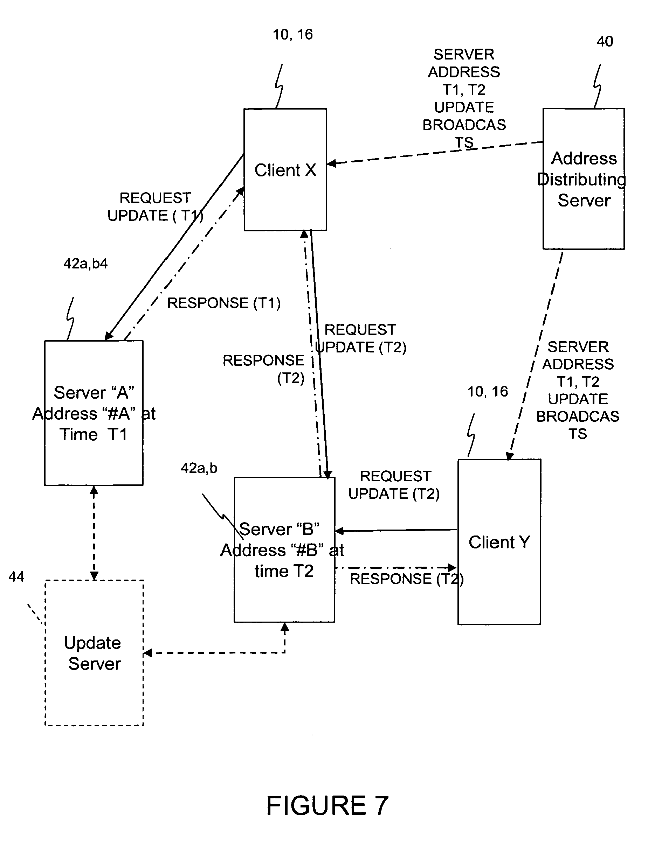

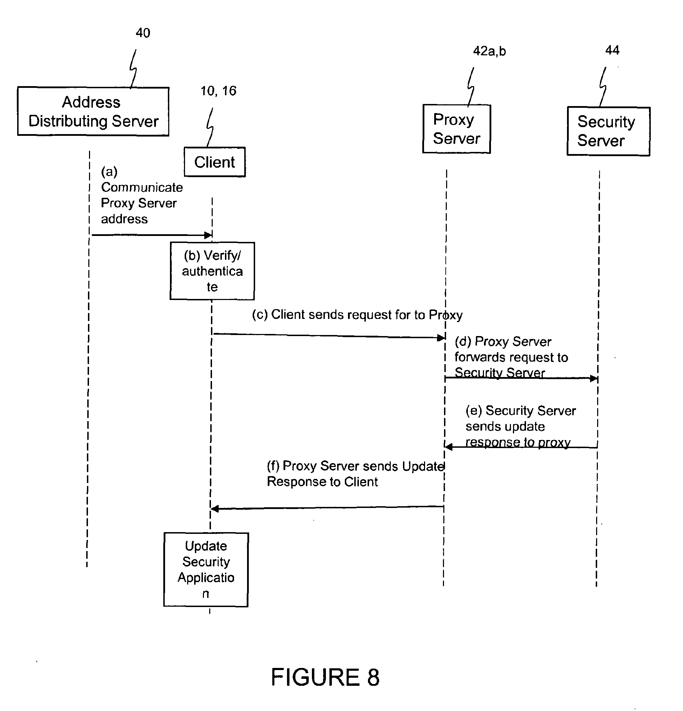

Figures 7 and 8 show embodiments of a system for identifying a software contaminant on a client device according to the invention in which an address distributing server broadcasts updated addresses to clients.

In Figure 7, address distributing server 40 broadcasts the address "#A" for a data server A at a first point in time (T1) and at a later point in time (T2), it will also broadcast a different address for a data server B. In some embodiments servers A and B each comprise the security software update server 44 itself which is assigned a dynamically changeable server address. Alternatively, as is shown in Figure 7, data servers A and/or B comprise a proxy server 42a,b (in which case the proxy server 42a,b will forward communications received from a client terminal 10, 16 to a security software update server 44. This embodiment is also shown by the message flow in Figure 8. In both embodiments, each broadcast address is valid only for a given period of time. For example, in Figure 8, server address #A for server A is valid for a first given period of time T1, after which a new address #B, for server B, is broadcast by address distributing server 40 which is valid for a second period of time T2, and so on.

Within time period T1 for which its address is distributed by address distributing server 40, the server A is operational and client terminals "X" and "Y" will be able to address their requests for update information to server A. After time period T1 has expired, however, a new server address #B is broadcast which is a valid address for a period of time T2. The address #B for server B is advertised by the address distributing server 40 sending out a new update broadcast. The broadcast may be repeated more than once within each time period or just at the start of each time period. There may be a short overlap in time during which more than one server address is valid to ensure continuity of the update service for client terminals.

In Figure 7, client terminals X, Y are shown requesting updates for their respective security software applications 32 from server B by sending information to the server address #B within time period T2. When a request is received by a validly contactable update server, the server processes the request and responds to the client terminal X, Y which sent the request with update information for that requesting client terminal's security application 32 which is encapsulates the data server 42 or update server 44 address in a suitable communications format for that client terminal. The security application 32 is then able to recognise the additional security information update communication using a suitable technique, for example, by scanning the incoming communication as mentioned herein above for a code comprising a "tag" to identify the communication contains encrypted data which comprises a new server address and/or another coded type of "tag" to enable the security application 32 to recognise a communication contains update information. Alternatively, the security application may simply match the source address of the incoming message (the sending server's address) to the address to which the update request was sent to by the client terminal 10, 16. In embodiments where an update data request is addressed by the client device 10, 16 to a proxy server 42a,b for forwarding to an update server 44, the update server 44 is required to respond via the proxy server 42a,b which substitutes the update server source address with its own source address in the response in order to enable the source address of the response to be matched at the client terminal 10, 16 to the address of the proxy server 42a,b.

In the embodiment shown in Figure 8, servers A and B shown in Figure 7 comprise proxy servers 42a,42b and it is the proxy server address which is broadcast by the address distributing server 40. The security application running on a client terminal 10, 16 which then receives this broadcast message can determine it relates to a new address for its update requests 9 and the client terminal may also perform suitable verification/authentication on the incoming address information). When a client terminal subsequently sends out a request to a proxy server 42 at the latest server address it has received, which may be responsive to a triggering event and/or at a predetermined time (which may be determined to be non-periodic by varying the time intervals between requests for updates) the proxy server 42 will process the received request, possibly authenticating and/or verifying the client terminal source address against its own data records, and then forwarding the request (or information extracted from the request, or an encapsulation of the request) to security update server 44. The security update server 44 then processes the request, and responds with relevant information (assuming an update is available) to the proxy server 42. Proxy server 42 then forwards the request to the client terminal 10, 16 where the response is suitably processed (for example, to decrypt it/verify its source, to authenticate the message contents/ to extract the additional information provided etc (not necessarily in that order) so that the additional information can be used to update the security application 32, for example, with additional security related or non-security information (e.g. bug fixes, additional search/scanning or other capabilities etc).

Those of ordinary skill in the art will appreciate that there are potentially many variants on the embodiments, including the overall system architecture, described hereinabove. For example, one or more security servers 44 could be active for certain periods of time, including set times of day and/or for one or more days at a time, and each server 44 could broadcast its own address and/or response to broadcasts from the client terminals 10, 16 for operational server addresses. Thus the security update servers 44 can provide security update information directly by broadcasting or otherwise circulating their addresses to client terminals 10, 16 (or indirectly if the address distributing server 42 performs such a broadcast). In some embodiments, a client terminal 10, 16 generates an security application update request responsive to receiving an address update, however, in other embodiments requests for updates for the security application are sent instead if a triggering event occurs and/or at a range of predetermined points in time and/or at random points in time (which may provide more protection against an update request being recognised by software contaminants located on a client terminal 16).

In one embodiment, each security update address is unique per request, and generating a request for new security information also triggers a request by the client for a new server address (either before or after the security application update request is generated). Each server address update includes information on the name, IP address, and connection port to which the client terminal 10, 16 is to address security application update requests. In one such embodiment, each security server address (or equivalently proxy server address) is assigned from a range of addresses all of which result in communications being actively routed to the security server.

In one embodiment, a device is located within an ISP or organisation which provides an intermediary location from which updates to a variety of solutions can be sourced. In one embodiment, each server 42 functions as a trusted proxy to a vendor's update site(s) by routing traffic to that site. A server 42 accepts trusted connections from all devices within a network with which it is associated (e.g.: a client terminal 10, 16) and is not identifiable by name or purpose until such time as it receives an appropriate request. The proxy server 42 is advertised within a network to connected client terminals 10, 16 , using either a proprietary or open method. For example, a local DNS TXT name, broadcast or proprietary handshake to initiation the connection from the update mechanism on a client terminal 10, 16.

In one embodiment, a client terminal comprises a computer device which requests an update from a security service provider ("SSP"). The update mechanism of the security application 32 running on the computer sends a request out, is responded to (by whatever means) with the next available proxy address for example,: proxy34.xxinternet.com (or a randomly/pseudo-randomly generated address) The security application 32 update program then connects to proxy34.xxinternet.com, and delivers an encrypted or digitally signed routing request saying "route this session to updates.SSP.com" . In one embodiment, a signature is provided which allows enables the signing key for any update communications messages to be changed in the event one of the routing nodes is compromised and the signing key is extracted. The proxy server 42 then initiates a connection to SSP's servers and proxies the traffic, for example, in one embodiment, proxy server 42 functions as a caching proxy, for example a SQUID proxy server. The client terminal 10, 16 then downloads the relevant security application update data (which may be provided as one or more messages and/or file transfers or even streamed depending on the characteristics of the update programs / data and these are then applied (assuming no local code execution barriers).

Even when a client terminal 10, 16 has already been infected with a software contaminant (e.g. Malware) which is blocking access to a known update server 42, 44, the software contaminant will be ineffective as soon as the update server address changes to an address unknown to the software contaminant. The identity of the proxy server 42 is random, and cannot be coded against as a constant to be blocked. This means that even if local routing blocks are put in place by the software contaminant (Malware), the security application update will bypass the blocks. If the software contaminant (Malware) blocked significantly more than just access to the update servers, 42, 44 this would make its presence on client terminal 10, 16 more likely to be detected by a user and/or another machine, which in turn reduces its abilities to propagate or act as a Bot.

In one embodiment, a client terminal 10, 16 stores a preconfigured list of proxy address distributing servers 42a,b, and modifies the address used each time a triggering event occurs and/or from time to time. An example of a triggering event is when a client terminal 10, 16 broadcasts a request for a new address for its update requests responsive to a said security application 32 located on the client terminal 10, 16 determining that a said remote security update server 44 is not accessible at an address which the security software was previously able to access

The request may be broadcast after one or more intervals of time and/or broadcast responsive to the device and/or said security software determining that the device has said state in which a said previously accessible remote server address is no longer accessible. For example, if a "heartbeat" communication from the remote server is no longer received or fails to comply with one or more authentication requirements imposed by the client device.

In this way, at least one embodiment of the invention provides a system and method which enable malware or any other form of contaminant software which performs one or more operations on a communications-enabled device to be identified if new data is received which enables its identification, appropriate data can be also received to enable the contaminant to be disabled and/or removed. The communications device 10, 16 has a first state in which it has a security application 32 which is capable of establishing a connection to an addressable remote server 44. The one or more operations performed by said contaminant software cause said communications device 10, 16 to have a second state in which the addressable remote server 44 accessible by the security application 32 of said device in said first state at said given address is not accessible at said address by the device 10, 16 in the second state. The software contaminant is disabled and/or removed from the device 10, 16 (a client terminal 16) by providing the device 10, 16 with an address for a proxy server 42a,b , the address of the proxy server 42a,b being addressable by the security application 32 running on the device 10, 16 in its second state. This enables the establishment of a communications channel between said device 10, 16 and said addressable remote server 44 via said proxy server 42a, b, said channel providing said security application 32 with data, and the security application 32 then uses the additional data to enable the device 10, 16 to disable at least one of said operations performed by said contaminant software 34.

The term client terminal 10, 16 as used herein refers to any appropriate communications enabled device which comprises an operating system which is capable of supporting a security application, for example, a mobile telephone type device, personal digital assistant, personal computer, portable computer, television set-top box, games console, domestic appliance, control system, etc., etc.,

One aspect of the invention comprises an address update distributing server arranged for use in a system as described herein and in the accompanying claims.

Another aspect of the invention comprises an additional security application data providing server 44 arranged for use in a system as described herein and in the accompanying claims.

Another aspect of the invention comprises a proxy server 42 arranged for use in a system as described herein and as claimed in the accompanying claims.

The above description refers to an embodiment of the invention in which a security application recognizes when a valid update address has been communicated to it hidden in an incoming communication, for example, a special communication disguised as an email.

The special nature of the communication is detected by the application scanning the incoming communications for a signature tag, for example, a code, which is embedded in the communication either in the header data or in the main body of the communication. The tag may be an encoded version of the actual server address which the application decodes to determine, or it may function as an index to refer the application to a new server address stored on the client terminal which the application can then retrieve using the code (or its decrypted version) as a look-up key. If the signature tag or code is encrypted, suitable decryption techniques include public/private key pairings etc, or any other mechanism which would prevent malware from determining the key yet enable the tag to be received. The tag may be embedded in an image or text sequence or otherwise disguised. In one embodiment, even if a user determines the special communication appears to be unwanted email and deletes it, the application will have completed its scan as the communication is downloaded to the client terminal and extracted the key

The updated server address is capable of being distributed in a disguised form in the above described embodiments of the invention as the security application is arranged to protect the integrity the client terminal and so will scan incoming data communications for software contaminants as part of the its normal mode of operation. The same mechanism, which detects the "signature" code of software contaminants such as computer viruses, enables the security application running on the client device to detect a server address is to be updated whenever data is detected which conveys a coded signature or tag to trigger the use of and/or decrypt to derive the new server address for obtaining security updates from. Client devices will generally be configured to use the new server address immediately to request data updates. In this way, software can be distributed to client devices and securely updated provided that the location of the update server is indicated in tagged communications which cannot be imitated by spurious sources.

Examples of coded items include tokens or "signatures" or the address of a new server or the encrypted address of a new server.

Examples of an incoming communication include an electronic mail, instant message, short text message, web-page content, mobile device management communications, content distributed in file or streamed format, or suitable communications protocol messages, including management protocols for devices on digital subscriber line networks such as TR-069, a Simple Mail Transfer Protocol (SMTP) format communication or a Simple Network Messaging Protocol (SNMP) format communication. The incoming communication may comprise a communication generated by the security update server system or a communication from another source, including a randomly selected source, into which the special code item is embedded. The communication may be addressed to a user account accessible by the device and/or be addressed to a destination address associated with the client terminal.

Client terminals can comprise terminals embedded in other devices/systems including automobiles, trains, airplanes, helicopters, fridges, and domestic appliances etc., etc.

A security application may be configured to manage the impact of software contaminants affecting hardware components and/or coded contaminants resident in hardware components, for example, malware which embeds itself in video card components or BIOS space.

The remote server according to any of the embodiments of the invention described herein may be configured to send out communications to a plurality of client devices. Each communication may be addressed to a particular client device or sent as a broadcast communication. Each device receiving such an incoming communication may process it to receive the same update server address or one of a plurality of different update server addresses. The remote server may be configured to automatically push out updates to one or more client devices depending on one or more criteria being met such as, for example, whether a particular period of time has elapsed since the last update communication was sent. The elapsed period of time may be regular or irregular.

### SERVER ADDRESS CHANGE

This invention relates to how a server such as the security server 44 (or server system 12) described above can be configured to automatically change its communications address responsive to detecting a traffic event, the new communications address being communicatable to a plurality client terminals 10,16 using any of the above described methods. Typically the communications address will comprise an IP address, although as mentioned above there is no requirement to limit to such an address.

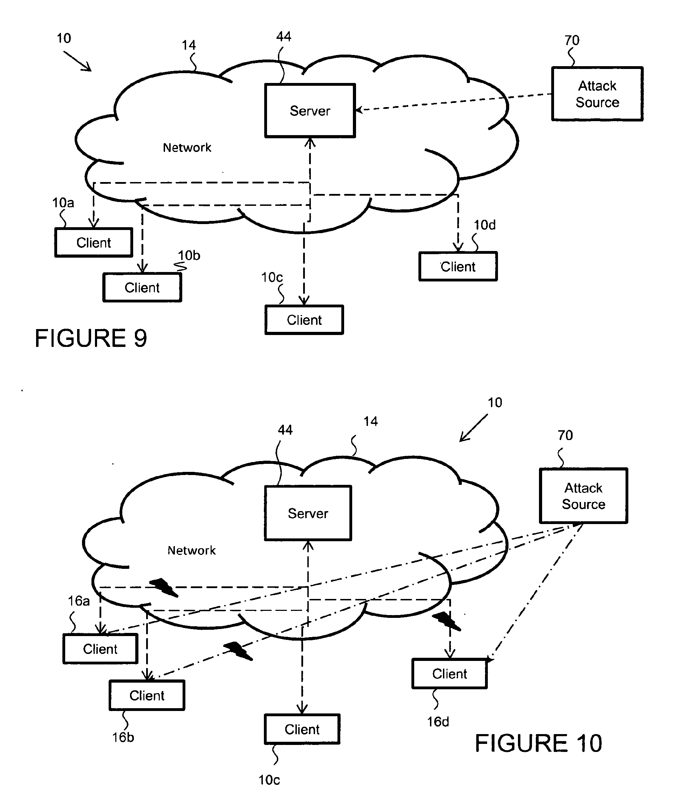

Figures 9 to 13 of the accompanying drawings relate to a typical scenario in which a server is subject to an attack, or intrusion attempt by an attack source 70 and how this is dealt with in one embodiment of the invention. As shown, the attacked server comprises the security server 44 itself. However, those of ordinary skill in the art will appreciate that if a server system 12 includes one or more proxy servers 42 for server 44, references to the server 44 changing its source address can be equally applied (if suitably modified as would be apparent to anyone of ordinary skill in the art) to the proxy server 42 changing its source address if the proxy is attacked or if an intrusion attempt is detected at the proxy server 42, or indeed if any other part of the security server system 12 determines its address has been compromised and relocation is required.

Referring now to Figure 9 of the drawings in more detail, this shows schematically attacking source 70 targeting a server 44 with a view to compromising its ability to remotely provide services to a plurality of client terminals 10a,b,c,d, over communications network 14. The services can comprise providing software updates, such as those described hereinabove in the context of security software updates, but in alternative embodiments other services may be provided. Typically the attacking source 70 will seek to identify the type of service(s) offered by server 44 and/or the IP address of the server 44 with a view to subsequently distributing code to client terminals 10a,b,c,d to prevent client terminals 10a,b,c,d from being able to establish communications with server 44.

Figure 10 of the accompanying drawings shows schematically the attacking source 70 targeting a plurality of client terminals 10a,b,c,d. In Figure 10, three of the client terminals are shown as contaminated client terminals 16a,b, and d having received from attack source 70 a software contaminant which negatively affects the ability of the contaminated client terminals 10a,b,d to communicate with server 44. An example of such a software contaminant blocks attempts by the client terminals 10a,b,d to establish a connection with the IP address of server 44, for example, such as would be required for the client terminals 10a,b,d to obtain additional software (software updates) for security software such as anti-virus/malware removal software.

According to one embodiment of the invention, however, server 44 is configured to monitor communications traffic and if the state of the traffic monitored complies with one or more predetermined criteria, the server is configured to automatically change its IP address to a new IP address.

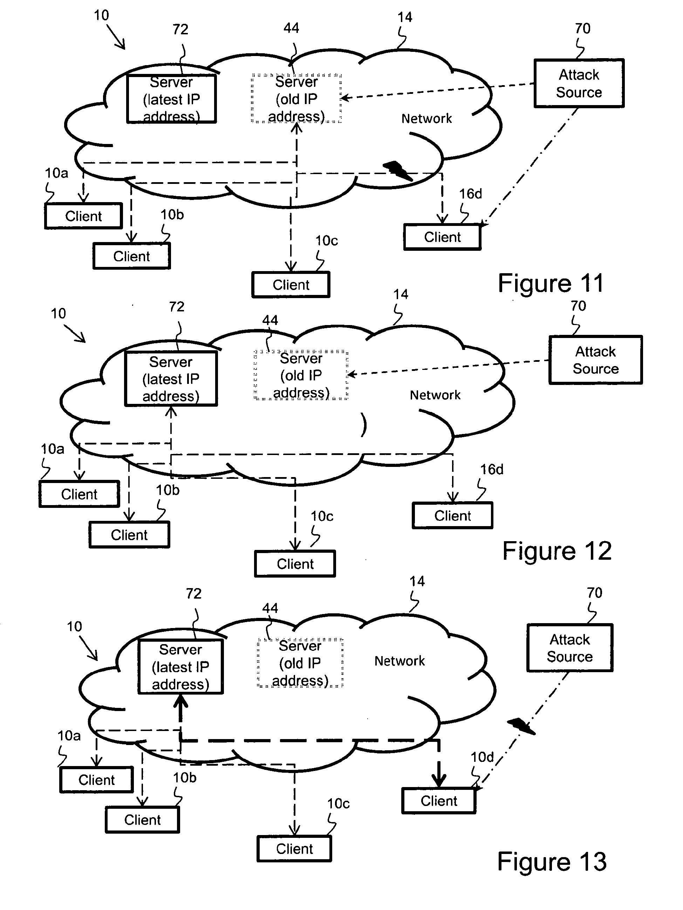

Initially when the server 44 uses a new IP address (shown as server (latest IP address) 72 in Figure 11) both uncontaminated client terminals 10a,b,d and any contaminated client terminals (only one 10d being shown for clarity in Figure 11) will be remain configured to communicate with the server at the old IP address. The attack source 50 also has knowledge at this point only of the old IP address of server 44. However, after each client terminal 10a,b,c,d has used one of the above described techniques for obtaining the new IP address at which the server 44 can be contacted, both the uncontaminated client terminals 10a,b,c and contaminated client terminal 16d will be able to re-establish communications with the server 72 at the new IP address (assuming the software contaminant has not interrupted communications to the new IP address by the time the client terminals 10a,b,c and 16d are reconfigured to contact the server 72 at this new IP address (as shown in Figure 12).

This allows server 72 to be able to provide contaminated client 16d with additional data which may including data enabling a security software application running on client terminal 10d to detect the software contaminant and restore the client terminal 10d to an uncontaminated state (shown schematically in Figure 13).

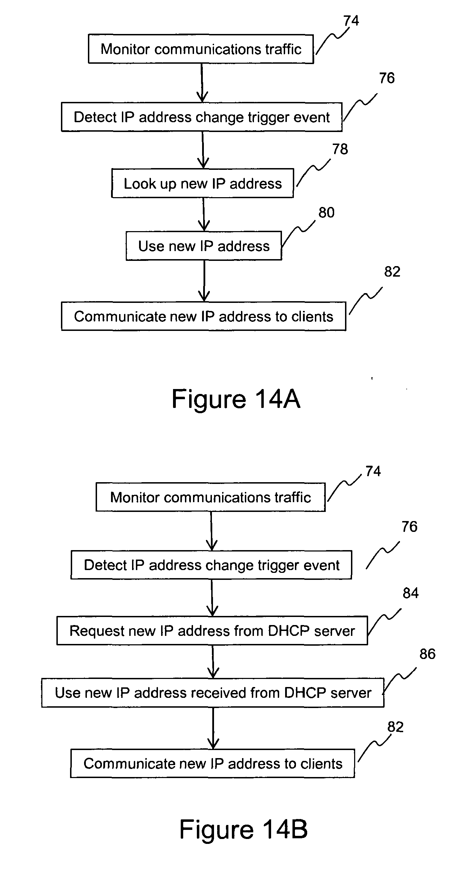

Figures 14A and 14B show schematically steps performed by two different embodiments of a server 44 which is configured to implement a method of automatically changing its source address responsive to a trigger event comprising monitored traffic-characteristics meeting at least one address change criterion,

As shown in Figures 14A and 14B the server 44 monitors communications traffic (step 74) using a suitable technique known in the art. The server is either configured to monitor traffic directly or is arranged to receive traffic monitoring metrics from a traffic monitor, or to be communicated that an address change trigger if a traffic monitor has determined an address changing criterion has been met. One example of a type of monitored traffic characteristics comprises a traffic volume metric such as, for example, a data rate/bandwidth utilization by communications traffic from one or more source addresses. An exemplary address change criterion for this type of traffic comprises the traffic volume increasing above a per-determined level (as in when such traffic may be attempting to exhaust the resources on the server to respond to legitimate traffic, such traffic sources thus having malicious intent), Other examples of the type of traffic characteristics comprise traffic associated with intrusion attempts to access to one or more secure areas of the server and/or attempts to gain port and/or other data interface credentials (an exemplary address change criterion here being the detection of such an attempt). Another example of a traffic type characteristic which could be monitored is the repetition rate at which traffic is received from one or more sources. The criterion for this type of monitored characteristic can comprise the repetition rate rising or falling as if many clients of the server are compromised a drop in update requests may be detected. In the latter case, the server itself may use heartbeats or other techniques well known in the art to ensure communications connectivity with client terminals, and if there is a statistical deviation beyond an acceptable amount this may be used as a change address criterion.

In one embodiment thus it is possible for the server to be configured to only monitor traffic with client terminals and to use client-server traffic characteristics to trigger any address change.

Once an IP address change trigger event has either been detected by the server 44 or a notification of an IP address change trigger event has been communicated to the server (step 54 in Figures 14A and 14B),

This triggers the server 44 to change its IP address using a suitable technique. As shown in Figure 14A, the server 44 is configured to perform a look-up operation to retrieve a new IP address from a suitable data store (step 56) (for example, if the server 44 is configured to store a range of IP addresses for such purposes), the server 44 then uses the new IP address (step 58). This use requires the new IP address to have been provided to all necessary network nodes for routing purposes, if not the server needs to be configured to communicate all the required information which would enable communications to be routed to and from the new IP address by network routing equipment.

Figure 14B shows alternative steps for a server 44 to obtain a new IP address comprising the server requesting (step 62)a new IP address from a remote dynamic host control protocol (DHCP) server. The server then uses a new IP address received from the remote DHCP server responsive to the DHCP server processing the request (step 64).

Finally, both Figures 14A and 14B show that the new IP address is communicated to the clients terminals 10a,b,c, and 16d (step 88). In one embodiment this is performed by server 44,72 communicating with a proxy server 42. Alternatively, a network broadcast via a secure communications protocol or other non-spoofable method known in the art can be used to advise one or more proxy servers 42 and/or client terminals 10a,b,c, and 16d of the change of IP address of server 44. Preferably, the new IP address is provided in a disguised communication sent by a proxy server 42 or the server 44 using one of the above-mentioned methods in which client terminals 10, 16 are configured to communicate with a remote server to obtain additional data for a security application, in which the security application when running on each client terminal 10, 16 is configured to scan incoming communications to determine if the incoming communication comprises a special code item, and if so, process the special code item to determine the new server address. The server address which is determinable from the special code item comprises an address which is different to the source address of the incoming communication. By extracting the special code item and processing it the new server address is determined (for example, the special code item may comprise an encrypted version of the new server address, or a key to perform a look-up to determine the new server address if the client terminal has also been provided with a list of server addresses from which the new server address is obtained using the key). The application running on the client terminal can then be reconfigured to use the new server address for communications purposes, for example, for requesting for additional information for use by the security application to enable the detection and/or disablement and/or removal of any previously undetectable or unremovable software contaminants on the client terminal.

In one embodiment, the server 44 detects an address change trigger event by monitoring individual client terminal states. In this embodiment server 44 maintains a state table for client interactions which stores the last time an individual client terminal communicated with the server and which stores a record of whether the client terminal 10, 16 is off-line due to a controlled (i.e., normal) shut-down event having occurred on the client terminal 10, 16. In this case, the client terminal is configured to communicate with the server 44 as part of the shutdown process. In another embodiment, the server polls client terminals (or a random sample) at regular intervals and if the number of responses drops below a certain level, an address change trigger is generated.

In one embodiment the new IP address becomes useable by the server after the operating system of the server has re-initialised the network card on the server, meaning that the server is off-line for a short time-period (of the order of 10 or so seconds). At this point the server is able to roll-back to its original state and broadcast its new IP address.

Alternatively, if the server has access to more than one interface, it can simply begin to use the new IP address on the additional interface (for example, if the server is located in a rack providing two data interfaces). In this case the server operating system will shut down the interface on one level and boot-up the interface on the other level.

In another embodiment, the server comprises a virtual machine and is thus able to relocate to a completely new data centre to use the new IP address at a different "mirror" server site.

In another embodiment, server 44 broadcasts or multicasts to the client terminals 10, 16 as described herein above a communications message within which data is provide enabling the client terminals to derive the new IP address, and then subsequently commences use of the new IP address.

Exemplary embodiments of the invention are described in detail herein above and pictorially in the accompanying drawings; however, the invention is not intended to be limited to such exemplary embodiments and includes various obvious modifications and equivalent arrangements which fall within the scope of the appended claims. Features referred to explicitly herein and in the claims may be replaced with alternative features providing functional equivalents where such functional equivalents would be known to those of ordinary skill in the art.

In the above description, references to "one embodiment," "an embodiment," "example embodiment," "various embodiments," etc., indicate that the embodiment(s) of the invention so described include a particular feature, structure, or characteristic. However, it is not necessary for every embodiment to comprise that particular feature, structure, or characteristic. Where the phrase "in one embodiment," or "in an exemplary embodiment," is referred to herein above it may or may not refer to the same embodiment as would be apparent to one of ordinary skill in the art.

Terms referring to features such as, for example, "processing," "computing," "calculating," "determining," or the like refer to an action and/or process(es) undertaken by a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

A "client terminal" comprises one or more data processors, where a data "processor" refers to any device or portion of a device that processes electronic data from registers and/or memory to transform that electronic data into other electronic data that is capable of being stored in registers and/or memory.

One or more embodiments of the invention include apparatuses for performing the operations herein. An apparatus may be specially constructed for the desired purposes, or it may comprise a general purpose device selectively activated or reconfigured by a program stored in the device.

Where appropriate, a feature described herein in an embodiment of the invention may be implemented in one or a combination of hardware, firmware, and software. Where a feature is implemented as instructions stored on a machine-readable medium, such instructions may be read and executed by a computing platform to perform one or more or all of the operations and/or method steps described herein.

A security application according to an embodiment of the invention may be distributed using any machine-readable medium including hardware and/or downloaded using an appropriate data communications signal.

The term "machine-readable medium" comprises any mechanism for storing or transmitting information in a form readable by a machine (e.g., a computer). Examples of machine-readable mediums include, but are not limited to : read only memory (ROM), random access memory (RAM), magnetic disk storage media, optical storage media, flash memory devices, and propagated electrical, optical, acoustical or other suitable digital and/or analogue signals (for example, carrier waves, infrared signals, digital signals, etc).

References to the term "computer program" and/or "computer control logic" include as appropriate references to machine code and/or executable code and/or source code which when compiled results in execution on a computing platform of the computer program.

A computer program may be provided in an electronically downloadable format or in a format which is stored in the main memory and/or secondary memory of a computing platform and/or data storage means capable of being attached and removed from a computing platform. Where a computer program is stored in one or more data storage means it comprises a computer program product. Such computer programs, when executed, are arranged to enable the computer platform or system to perform the features of the present invention as discussed herein. In particular, the computer programs, when executed, are arranged to enable a processor to implement one or more steps in a method according to an embodiment of the invention. Accordingly, such computer programs may represent data controllers of the computer system.

A computer program product comprising a computer readable medium having control logic (computer software) stored therein may be provided to distribute the invention or cause, when the product is loaded and running on one or more computer platforms, a method according to the invention to be performed. The control logic, when executed by one or more processors, causes the one or more processors to perform the functions of a method as described herein. The computer program product software may be loaded into a computer system using any appropriate means, including appropriate data storage reading means and/or via a network communications interface card. Software implementing control logic executed by a data processor causes the processor to perform the functions of an embodiment of the invention as described herein. The computer program product software may run as a standalone software application program running in an operating system. Alternatively, it may be integrated into an operating system of the computing platform.

Features implemented primarily in hardware may comprise, but are not limited to, hardware components such as application specific integrated circuits (ASICs), field programmable gateways (FPGAs) or one or more state machines, etc. Any appropriate implementation of the hardware state machine so as to perform the functions described herein may be used as is apparent to a person or persons skilled in the relevant art(s).

The embodiments and examples discussed herein are non-limiting. The embodiments of the invention described in detail herein above form exemplary embodiments only and it will be apparent to those skilled in the art that changes and modifications may be made without departing from the spirit and scope of the invention, for example, in its broader aspects. The embodiments of the invention as defined in the claims are intended to cover all such changes and modifications as fall within the true spirit of the invention.

## Claims

1. A server configured to automatically change its IP address responsive to an address change triggering event, the server comprising:
means to communicate repeatedly with a plurality of client devices over a communications network;
means to receive information on one or more monitored traffic characteristics;
means to change a current IP address used by the server for communications with a plurality of client devices responsive to said one or more monitored communications characteristics meeting a set of one or more IP address change criteria; and
means to provide a new IP address used by the server as a result of said change to each of said plurality of client devices for use in future communications with said server.

2. A server as claimed in claim 1, the server comprising a source of information for updating security applications running on said plurality of client devices.

3. A server as claimed in any previous claim, wherein a criterion for changing to a new IP address comprises the number of client communications with said sever falling below a predetermined level.

4. A server as claimed in any previous claim, wherein a criterion for changing to a new IP address comprises the traffic received by the server exceeding a predetermined amount.

5. A server as claimed in claim 4, wherein the amount of traffic is dependent on the number of client devices currently configured to communicate with the server.

6. A server as claimed in claim 4 or 5, wherein the amount of traffic from the same source is determined, and wherein a said criterion comprises the amount of traffic from the same source exceeding a predetermined amount.

7. A server as claimed in any previous claim, wherein said means to provide said changed IP address comprises means to generate a communication to a proxy server, the proxy server comprising means arranged to generate a communication comprising a special code item which enables said new IP address to be determined by each said client terminal.

8. A server as claimed in any previous claim, wherein a monitored traffic characteristic indicates one or more attempts to obtain a current server IP address.

9. A server 44 as claimed in any previous claim, wherein the server 44 is configured to broadcast or multicast to said plurality of client terminals (10, 16) a communications message within which data is provided which when processed by a said client terminal (10, 16) enabling the client terminal (10, 16) to derive the new IP address for the server, said broadcast or multicast having the old IP address of the server 44 as source address.

10. A communications system comprising:
a server as claimed in any one of claims 1 to 9;
a proxy server;
and at least one said client terminal arranged to communicate with said server to obtain additional data for a security application running on said client terminal, the security application when running on said client terminal comprising:
means to scan an incoming communication;
means to determine if the incoming communication comprises a special code item;
means to process the special code item to determine a said new server address; and
means to use said new server address for communicating a request for said additional information to said server address.

11. A system as claimed in claim 10, wherein said incoming communication has an address of said proxy server as its source address.

12. A method of changing an IP address of a server, the method comprising:
monitoring one or more characteristics of communications traffic addressed to or from the server;
determining if at least one monitored characteristic meets an address change criterion;
causing a change in the IP address of the server responsive to said determination of a address change criterion being met.

13. A method as claimed in claim 12, wherein at least one monitored traffic characteristic indicates one or more attempts to obtain a current server IP address.

14. A method as claimed in claim 12, wherein at least one type of monitored traffic characteristic comprises a client-server communications traffic rate characteristic, and wherein said address change criterion comprises said client-server communications rate meeting or falling below a predetermined level.

15. A method as claimed in claim 12, wherein at least one type of monitored traffic characteristic comprises a non-client-server communications traffic rate characteristic, and wherein said address change criterion comprises said non-client-server communications rate meeting or rising above a predetermined level.
